**Europäisches Patentamt**

**European Patent Office**

**Office européen des brevets**

(11) Numéro de publication : **0 084 998**
**B1**

(12) # FASCICULE DE BREVET EUROPÉEN

(45) Date de publication du fascicule du brevet :
21.01.87

(51) Int. Cl.⁴ : **G 02 B 27/22, G 03 C 9/00**

(21) Numéro de dépôt : **83400109.1**

(22) Date de dépôt : **17.01.83**

(54) Appareil optique et procédé pour l'enregistrement ou la visualisation instantanée d'images agrandies et stéréoscopiques d'objets.

(30) Priorité : **22.01.82 FR 8200965**

(43) Date de publication de la demande :
**03.08.83 Bulletin 83/31**

(45) Mention de la délivrance du brevet :
**21.01.87 Bulletin 87/04**

(84) Etats contractants désignés :
**CH DE GB LI SE**

(56) Documents cités :
**DE-C- 653 168**
**FR-A- 750 156**
**US-A- 3 535 993**
**US-A- 3 737 229**

(73) Titulaire : **Etablissement Public dit: CENTRE NATIO-NAL DE LA RECHERCHE SCIENTIFIQUE (CNRS)**
**15, Quai Anatole France**
**F-75700 Paris (FR)**

(72) Inventeur : **Bonnet, Maurice**
**14 quartier Boildieu**
**F-92800 Puteaux (FR)**

(74) Mandataire : **Martin, Jean-Jacques et al**
**Cabinet REGIMBEAU 26, Avenue Kléber**
**F-75116 Paris (FR)**

## Description

La présente invention concerne un procédé pour enregistrer ou visualiser instantanément des images agrandies d'objets « en relief » ou images stéréoscopiques et un appareil optique mettant en œuvre ce procédé.

Par images agrandies d'objets, on entend des images dont les dimensions sont du même ordre de grandeur ou supérieures à celles de l'objet.

Par images « en relief » ou stéréoscopiques, on entend une image qui permet à un observateur de celle-ci d'avoir d'un même objet représenté, une vision différente, correspondant à différents angles d'observation de celui-ci, c'est-à-dire à une perspective changeante de l'objet, en fonction de la position de l'observateur vis-à-vis de l'image. En d'autres termes, de telles images permettent, lors de la visualisation, d'une part, d'observer l'objet sous des aspects changeants en fonction de l'angle d'observation, d'autre part, même si l'observateur est immobile, de créer une impression de relief en raison de la vision binoculaire, puisque, les deux yeux de celui-ci recevant des images légèrement différentes du même objet, le cerveau peut reconstruire le volume spatial.

On connaît déjà différents dispositifs permettant d'obtenir de telles images, qui donnent, lors de la restitution ou de l'observation de l'image, une impression de relief. A cette fin, on utilise habituellement un réseau lenticulaire formé d'une série de lentilles élémentaires épaisses, sphériques, ou de préférence cylindriques, juxtaposées. Les réseaux lenticulaires cylindriques se présentent ainsi habituellement sous forme d'une plaque de matière transparente dont une face est cannelée et l'autre plane.

De tels réseaux lenticulaires formés d'une série de lentilles élémentaires cylindriques juxtaposées, découpent ou échantillonnent les images qui les frappent en une série de pinceaux élémentaires allongés. La résolution finale dépend donc de la largeur de chaque lentille.

Un faisceau incident de lumière parallèle frappant la face convexe du système lenticulaire est focalisé au niveau du plan focal du réseau lenticulaire commun à toutes les lentilles cylindriques, plan focal qui correspond généralement à la face plane du réseau, sous forme d'une famille de lignes très fines, à raison d'une ligne en arrière de chacune desdites lentilles. Un second faisceau de lumière parallèle, ayant un angle d'incidence légèrement différent du premier faisceau, et correspondant par conséquent à un angle différent d'observation de l'objet, est découpé et focalisé en une seconde famille de lignes juxtaposées aux précédentes. Chaque famille de lignes formée au plan focal du réseau lenticulaire correspond à une direction particulière de la lumière incidente. On appelle l'image ainsi formée au plan focal du réseau lenticulaire, une « image composite ».

L'image composite est donc formée d'une série de familles de lignes dont la position dépend de la direction du faisceau incident.

Bien entendu, la largeur de chaque ligne dépend des défauts des lentilles cylindriques, tels que aberrations, astigmatisme, courbure de champ, et de la diffraction.

Dans des appareils optiques de prise de vue d'images en relief existant jusqu'ici, il s'est avéré nécessaire d'utiliser une pluralité d'objectifs ou d'autres dispositifs optiques, (tels que prismes dits de Wollaston ou de Dove,) ce qui rend les dispositifs optiques particulièrement compliqués, et leur mise au point délicate, ou d'opérer un mouvement, soit de l'objet, soit de l'appareil, ou des deux simultanément, afin de couvrir au moins approximativement chacune des zones situées au niveau du plan focal, en arrière des différentes lentilles du réseau lenticulaire. A cette fin, il est nécessaire que le mouvement relatif revienne à balayer dans l'espace image un angle correspondant sensiblement à l'angle de champ du réseau lenticulaire, c'est-à-dire l'angle qui détermine un domaine angulaire à l'intérieur duquel chaque direction du faisceau incident de lumière parallèle donne une famille spécifique de lignes-images au niveau du plan focal du réseau. Tout rayon qui sort de l'angle de champ du réseau lenticulaire, sera focalisé non plus sur la partie du plan focal située juste derrière la lentille cylindrique traversée, mais sur une autre partie correspondant à une lentille cylindrique voisine. Il convient donc de ne pas dépasser cet angle de champ, de façon à éviter les superpositions et le brouillage de l'information enregistrée sous forme de lignes.

Ledit mouvement entre l'objet et le réseau lenticulaire peut, par exemple, consister en une rotation de l'appareil de prise de vue autour de l'objet, en une translation du système lenticulaire, ou en une rotation simultanée de l'objet et du réseau lenticulaire.

On a décrit dans le brevet français FR-A-943601 un dispositif pour l'obtention de photographies en relief, particulièrement applicable à la macrophotographie, utilisant ce dernier type de mouvement. Le dispositif décrit dans ce brevet se compose de deux plates-formes susceptibles de rotation autour d'un axe, et supportant respectivement l'objet et l'ensemble système lenticulaire et émulsion photographique. L'objectif est fixe et un soufflet assure l'étanchéité optique entre celui-ci et le système lenticulaire. Les deux plates-formes sont synchrones et tournent pendant toute la durée de l'exposition déterminée par l'ouverture de l'obturateur, d'un angle égal à l'angle de champ du système lenticulaire. Bien entendu, la vitesse de rotation dépend des conditions d'éclairage, plus l'éclairage est intense, plus la vitesse est rapide. En outre, il est possible de changer le grandissement en faisant varier la distance objet-objectif et le tirage de l'appareil.

De tels appareils, s'ils fonctionnent correctement, nécessitent cependant, en raison du mouvement destiné à balayer l'angle de champ du réseau lenticulaire, des temps de pose relativement longs, interdisant par le fait même, la prise de vue d'objets animés et de phénomènes dynamiques.

De plus, les appareils classiques fournissent le plus souvent, dans une première étape, une image en relief inversée. Afin de corriger ce phénomène de pseudostéréoscopie, on prévoit, lors de la visualisation, soit de réinverser le relief de l'image composite, à l'aide d'une étape supplémentaire consistant à rephotographier l'ensemble négatif-système lenticulaire avec inversion de relief, soit d'insérer dans le dispositif de visualisation, des systèmes optiques, tels que des réseaux lenticulaires destinés à réinverser le relief lors de l'observation. Ces différentes solutions compliquent énormément le dispositif optique et ne donnent pas entière satisfaction.

En particulier, dans les appareils classiques, l'ouverture importante du faisceau impose d'utiliser au moins trois réseaux lenticulaires pour obtenir l'orthostéréoscopie.

Le document US-A-3 535 993 décrit un ensemble de structures permettant de redresser le relief d'une image échantillonnée composite. Ce document propose par conséquent un ensemble de structures permettant d'obtenir une image orthostéréoscopique.

Néanmoins, ce document n'apporte aucune précision quant aux modalités d'observation de l'image orthostéréoscopique ainsi obtenue.

Ce document se contente en effet d'évoquer, colonne 1, lignes 11 et 12 et colonne 2, lignes 32 à 34, qu'un système lenticulaire cylindrique de même type (même nombre de lentilles élémentaires par unité de longueur) que celui utilisé pour la prise de vue pourrait être utilisé lors de l'observation.

Le document US-A-3 535 993 décrit ainsi un procédé permettant d'obtenir des images stéréoscopiques d'objets, consistant :

a) à former à l'aide d'un objectif fixe une image d'un objet, au voisinage des lentilles élémentaires d'un premier réseau lenticulaire, de façon à créer une image échantillonnée composite, au niveau du plan focal du premier réseau lenticulaire,

b) à former une image composite orthostéréoscopique à partir de l'image échantillonnée composite à l'aide d'un second réseau lenticulaire, disposé après le plan focal du premier réseau,

c) à observer l'image composite orthostéréoscopique ainsi formée à l'aide d'un réseau lenticulaire d'observation, les pas des différents réseaux lenticulaires étant sensiblement égaux.

La présente invention vient proposer un nouveau procédé et un nouvel appareil optique permettant d'enregistrer ou de visualiser instantanément des images agrandies et en relief d'un objet, avec obtention directe de l'orthostéréoscopie, c'est-à-dire une restitution du relief sans déformation ni anamorphose. Un tel appareil permet donc, dans un mode de réalisation particulier, d'observer directement un objet, grossi et en trois dimensions, en relief correct.

Le procédé permettant d'obtenir instantanément des images agrandies et stéréoscopiques d'objets, conforme à la présente invention comprend les étapes consistant :

a) à former à l'aide d'un objectif fixe une image d'un objet, au voisinage des lentilles élémentaires d'un premier réseau lenticulaire, de façon à créer une image échantillonnée composite, au niveau du plan focal du premier réseau lenticulaire,

b) à former une image composite orthostéréoscopique à partir de l'image échantillonnée composite à l'aide d'un second réseau lenticulaire, disposé après le plan focal du premier réseau,

c) à observer l'image composite orthostéréoscopique ainsi formée à l'aide d'un réseau lenticulaire d'observation, les pas des différents réseaux lenticulaires étant sensiblement égaux, et ce procédé est caractérisé par le fait que l'on forme, à l'aide de l'objectif une image agrandie de l'objet, que les lentilles du premier réseau lenticulaire possèdent chacune un angle de champ sensiblement égal à l'angle d'ouverture de la pupille de sortie de l'objectif vue depuis ledit premier réseau lenticulaire, et que l'on choisit le réseau lenticulaire d'observation de façon telle que ses lentilles possèdent un angle de champ sensiblement égal à l'angle d'ouverture de la pupille d'entrée de l'objectif vue depuis l'objet.

Selon une variante de réalisation, le procédé comporte en outre l'étape intermédiaire qui consiste à enregistrer l'image agrandie composite orthostéréoscopique sur une pellicule photographique.

L'appareil optique pour enregistrer ou visualiser des images en relief d'objets, conforme à la présente invention comporte un objectif diaphragmé, fixe, donnant d'un objet une image agrandie, un premier réseau lenticulaire dont les lentilles élémentaires sont placées au voisinage du plan de ladite image agrandie, un angle de champ des lentilles élémentaires dudit premier réseau lenticulaire étant sensiblement égal à l'angle d'ouverture de la pupille de sortie de l'objectif vue depuis le premier réseau lenticulaire, et comprend, après le plan focal du premier réseau lenticulaire, un second réseau lenticulaire, destiné à inverser les images élémentaires formées par chaque lentille du premier réseau lenticulaire et à donner une image composite orthostéréoscopique, et un réseau lenticulaire d'observation de l'image composite orthostéréoscopique, dont les lentilles élémentaires possèdent un angle de champ sensiblement égal à l'angle d'ouverture de la pupille d'entrée de l'objectif vue depuis l'objet, les pas des différents réseaux lenticulaires étant sensiblement égaux.

L'image échantillonnée composite, instantanée, formée au niveau du plan focal du premier réseau lenticulaire, sera dite par la suite première image composite.

Selon un mode de réalisation de la présente invention, une lentille de champ de même format que le réseau lenticulaire, ou un élément fonctionnellement analogue, est disposé en amont du premier réseau lenticulaire.

De façon avantageuse, l'objectif et la lentille de champ forment un système afocal.

Selon un autre mode de réalisation de la présente invention, une émulsion photographique est disposée au niveau de l'image composite orthostéréoscopique.

Selon un autre mode de réalisation de la présente invention, il est en outre prévu un réseau lenticulaire d'observation de l'image composite orthostéréoscopique, dont les lentilles élémentaires possèdent un angle de champ sensiblement égal à l'angle d'ouverture de la pupille d'entrée de l'objectif vue depuis l'objet, et de préférence de même pas que le premier réseau lenticulaire.

Selon une variante de réalisation, les lentilles du réseau lenticulaire d'observation sont de type convexe et sont disposées au niveau du plan de l'image composite orthostéréoscopique.

Selon une autre variante de réalisation, les lentilles du réseau lenticulaire d'observation sont de type concave et sont disposées au voisinage de la première image composite.

Selon un mode de réalisation de la présente invention, les réseaux lenticulaires précités comprennent des lentilles cylindriques, et il est en outre prévu un réseau lenticulaire jouant le rôle d'épanouisseur de faisceau, dont les lentilles cylindriques sont disposées perpendiculairement aux lentilles cylindriques du premier réseau.

Selon un autre mode de réalisation de la présente invention, les réseaux lenticulaires précités sont de type sphérique.

Selon un autre mode de réalisation de la présente invention, un dispositif redresseur d'images est disposé en amont de l'objectif.

D'autres avantages et caractéristiques de la présente invention apparaîtront à la lecture de la description détaillée qui va suivre, et en regard des dessins annexés donnés à titre d'exemples non limitatifs et sur lesquels :

la figure 1 représente schématiquement les différents éléments constituant une partie d'un appareil optique pour la mise en œuvre d'une première étape du procédé conforme à la présente invention,

la figure 2 représente schématiquement un appareil optique conforme à une variante de réalisation de la présente invention, permettant une prise de vue,

les figures 3 et 4 représentent schématiquement un dispositif d'observation d'une émulsion photographique et illustrent les problèmes liés à l'inversion de relief,

la figure 5 représente un appareil optique similaire au mode de réalisation de la figure 2,

la figure 6 représente schématiquement un mode de réalisation d'un appareil optique conforme à la présente invention, plus particulièrement adapté à la visualisation instantanée,

la figure 7 représente de façon schématique une variante de réalisation d'un appareil optique conforme à la présente invention, plus particulièrement adapté à la visualisation instantanée.

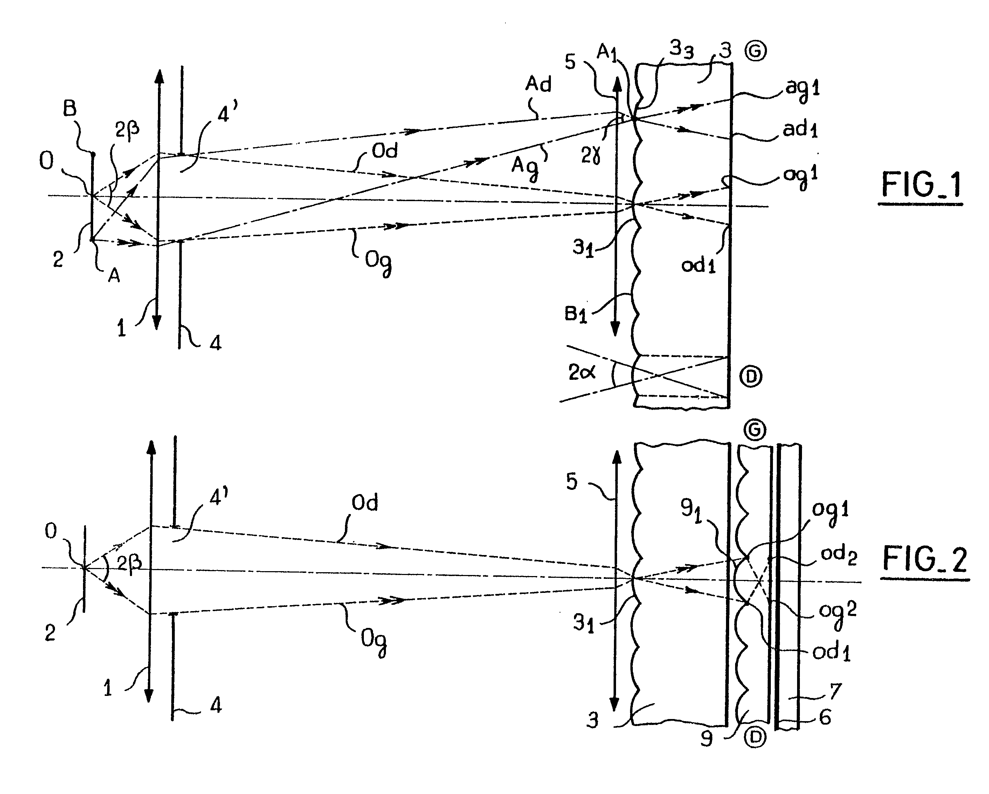

Les différents modes de réalisation représentés sur les figures 1 à 7, ne tiennent pas compte des dimensions relatives des éléments, ni des distances et espacements entre ceux-ci.

Le dispositif optique qui est représenté sur la figure 1, se compose d'un objectif 1, fixe, qui donne d'un objet 2, de largeur AB une image agrandie de largeur $A_1 B_1$ de grandissement g. Au voisinage du plan de l'image agrandie, on place un réseau lenticulaire 3, fixe, formé de préférence d'une série de lentilles cylindriques convexes juxtaposées, de longue focale, donc de faible angle de champ 2 $\alpha$, un diaphragme 4, fixe, d'ouverture 4' en forme de fine fente de section sensiblement rectangulaire est accolé à l'objectif 1, la grande dimension du diaphragme étant normale à l'axe des lentilles cylindriques. La forme du diaphragme est choisie par rapport au réseau lenticulaire, de façon telle que l'ouverture des faisceaux frappant les lentilles élémentaires soit très petite.

Une lentille de champ 5 couvrant le format de l'image est insérée sur le trajet des rayons lumineux parvenant au réseau lenticulaire 3 ; cette lentille de champ a pour but de paralléliser les directions moyennes des faisceaux de rayons frappant chaque lentille cylindrique du réseau lenticulaire 3.

Selon une variante de réalisation, la lentille de champ 5 peut également être formée d'une lentille de Fresnel classique.

L'ouverture de la pupille d'entrée de l'objectif 1 est vue de l'objet sous un angle 2 $\beta$ sensiblement constant, quelque soit le point de l'objet 2 considéré, tandis que l'angle sous lequel l'ouverture de la pupille de sortie 4' de l'objectif est vue à partir du plan image A1 B1 est égal à 2$\gamma$.

Les rayons étant légèrement déviés au passage de la lentille de champ 5, l'angle 2$\gamma$ est déterminé par l'angle que font entre eux deux rayons lumineux provenant initialement des deux bords opposés de l'ouverture de la pupille de sortie 4 tels que les rayons Ad et Ag, représentés sur la figure 1, lorsque ceux-ci parviennent sur la lentille élémentaire correspondante, lentille référencée $3_3$, en l'occurrence. Il apparaît clairement que l'angle existant entre les rayons Ad et Ag, lorsque ceux-ci parviennent sur la lentille cylindrique $3_3$, correspond à l'angle maximum que font entre eux des rayons lumineux passant par l'ouverture de la pupille de sortie de l'objectif.

Selon une caractéristique de la présente invention, on donne au réseau lenticulaire 3 un angle de champ 2$\alpha$ sensiblement égal à l'angle 2$\gamma$ précité.

On comprend qu'ainsi, sans qu'il soit nécessaire d'opérer le moindre mouvement de l'objet 2 ou des divers éléments constituant l'appareil optique, en particulier de l'objectif 1, de la pupille de sortie 4' et du réseau lenticulaire 3, les rayons lumineux provenant de l'objet 2, traversant l'objectif 1, l'ouverture de la pupille de sortie 4 et la lentille de champ 5, couvrent la quasi-totalité de l'angle de champ 2$\alpha$ du système lenticulaire 3.

Les faisceaux de rayons qui parviennent sur les lentilles élémentaires, parallèles entre eux, seront par conséquent focalisés au niveau du plan focal des lentilles sous forme d'une série de fines lignes définies précédemment comme constituant une famille de lignes. Les rayons légèrement décalés angulairement par rapport aux rayons précédemment cités formeront de même une seconde famille de lignes juxtaposées aux précédentes, et ainsi de suite jusqu'à couvrir la quasi-totalité du plan focal du réseau lenticulaire 3.

Afin d'éviter le recouvrement des lignes obtenues par focalisation de rayons à l'aide de deux lentilles adjacentes, il convient de s'assurer que l'angle 2γ, précédemment défini, est au plus égal à l'angle de champ 2α, de sorte que les rayons provenant de l'ouverture de la pupille de sortie 4 couvrent au maximum l'angle de champ 2α du réseau lenticulaire 3, lorsque lesdits rayons parviennent sur les lentilles élémentaires de celui-ci.

Ainsi, comme cela est représenté sur la figure 1, les rayons Od provenant d'une trace de l'objet 2 normale au plan de la figure 1 et qui contient le point référencé 0, rayons Od qui correspondent à une vision de droite de l'objet selon un angle d'inclinaison β par rapport à la normale au plan de celui-ci, sont focalisés par la lentille cylindrique $3_1$ au niveau du plan focal du réseau lenticulaire 3, en une ligne normale au plan de la figure 1 et qui contient le point odl.

De même les rayons Og provenant de la même trace de l'objet 2 qui contient le point référencé 0, mais qui correspondent à une vision de gauche de cet objet selon un angle d'inclinaison β par rapport à la normale au plan de l'objet 2, sont focalisés par la même lentille cylindrique $3_1$ au niveau du plan focal du réseau lenticulaire en une ligne normale au plan de la figure 1 et qui contient le point ogl.

Tous les rayons provenant de la trace normale au plan de la figure 1 qui contient le point référencé 0, rayons qui correspondent donc à une vision de l'objet comprise entre les deux angles d'observation précédemment cités, seront donc focalisés par la lentille cylindrique $3_1$, au niveau du plan focal du réseau lenticulaire 3 sous forme d'une série de lignes normales au plan de la figure 1, et contenues entre les lignes précédemment citées qui contiennent respectivement les points référencés ogl et odl.

De façon similaire, l'ensemble des rayons provenant d'une trace de l'objet normale au plan de la figure 1 et qui contient le point référencé A situé sur la gauche de l'objet 2, rayons qui passent par l'ouverture de la pupille de sortie et sont par conséquent compris dans le faisceau délimité par les rayons Ad et Ag représentés sur la figure 1, seront focalisés par la lentille $3_3$ au niveau du plan focal du réseau lenticulaire 3 sous forme d'une série de lignes normales au plan de la figure 1, comprises entre les lignes contenant les points ag1 et ad1 qui correspondent respectivement aux rayons Ag et Ad précités.

Le réseau lenticulaire 3, par conséquent, échantillonne l'image agrandie A1-B1, formée au niveau des lentilles élémentaires, et chacune de ces lentilles élémentaires couvre une surface du plan focal dont la largeur dépend de la largeur de l'ouverture de la pupille de sortie 4' de l'objectif. Les caractéristiques de ce système lenticulaire 3 (pas, épaisseur, angle de champ) doivent être, par conséquent, déterminées de façon que la largeur de la surface couverte du plan focal (og1-od1, ag1-ad1) soit sensiblement égale et dans tous les cas, non supérieure, au pas du réseau lenticulaire 3, afin d'éviter la superposition d'information.

Le développement qui précède et qui se réfère à des traces de l'objet et à des lignes du plan focal du réseau lenticulaire, concerne un appareil optique utilisant un réseau lenticulaire de type cylindrique. Bien entendu, le même raisonnement est applicable à un appareil optique utilisant un réseau lenticulaire formé de lentilles sphériques juxtaposées, en considérant non plus des traces de l'objet et des lignes du plan focal du réseau lenticulaire, parallèles aux lentilles élémentaires de celui-ci, mais des points de l'objet et des points correspondants du plan focal du réseau lenticulaire. Ce raisonnement est aussi applicable à un système lenticulaire composé de deux réseaux de lentilles cylindriques dont les axes sont perpendiculaires entre eux.

Comme cela apparaît sur la figure 1, l'image composite formée au niveau du plan focal du réseau lenticulaire 3 est inversée comme c'est le cas en photographie classique, le haut de l'image correspondant au bas de l'objet, la gauche de l'image à la droite de l'objet, et inversement. Comme cela apparaît sur la figure 1, le point A de l'objet 2 qui forme pour un observateur placé du côté de l'objectif par rapport à l'objet, le côté gauche de celui-ci, se retrouve sur la droite de l'émulsion photographique en agl-adl.

Outre ce premier inconvénient qui peut facilement être corrigé en retournant l'image (droitegauche, et haut-bas), à l'aide d'un dispositif redresseur approprié du genre prisme dit de Wollaston ou de Dove ou dispositif à miroir, disposé en amont de l'objectif, l'image formée au niveau du plan focal du réseau lenticulaire 3 présente l'inconvénient de correspondre à un enregistrement de l'image en relief inversé.

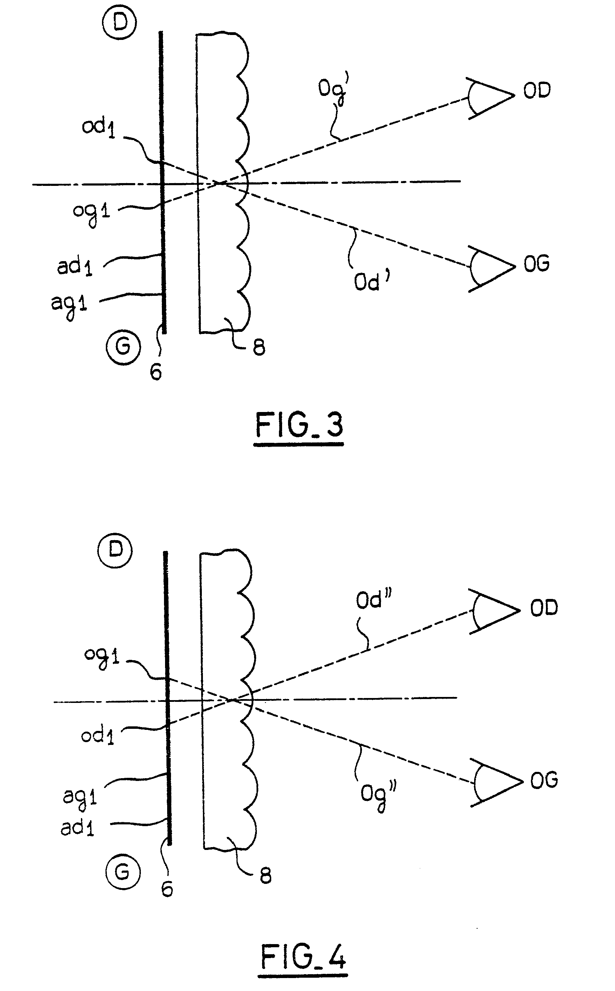

En effet, supposons que l'on place une émulsion photographique au niveau du plan focal du réseau lenticulaire 3. Lorsque après développement l'émulsion photographique 6 est retournée droite/gauche, et haut/bas, le côté gauche (G) de l'image doit se situer du côté gauche de l'observateur et le côté droit (D) de l'image à sa droite comme cela est représenté sur la figure 3. La série des lignes « agl-adl » correspondant à la trace de l'objet contenant le point A situé à la gauche de l'objet est donc située à la gauche de l'observateur.

Le point og1 qui correspond à une vision de gauche du point O de l'objet 2, selon un angle d'inclinaison β par rapport à la normale au plan de l'objet 2, est donc situé sur la gauche du point od1 qui correspond à une vision de droite du point O de l'objet, selon un angle d'inclinaison β par rapport à la normale au plan de l'objet 2.

Ainsi donc, lorsque après traitement photographique, on éclaire l'émulsion photographique 6 et qu'un observateur observe celle-ci à travers un réseau lenticulaire 8 de même pas que le réseau lenticulaire 3 utilisé pour l'enregistrement, et disposé face plane contre le support du cliché, face cannelée disposée vers l'observateur, le rayon Og' correspondant au point og1 qui devrait voir l'œil gauche (OG) parvient à l'œil droit (OD), et le rayon Od' correspondant au point od1 que devrait voir l'œil droit parvient à l'œil gauche, comme cela apparaît clairement sur la figure 3. On observe donc une image en relief inversée ou pseudoscopique.

Bien entendu, le réseau lenticulaire d'observation doit être du même type que le réseau lenticulaire 3 utilisé pour l'enregistrement. Ainsi, si le réseau lenticulaire 3 est de type sphérulé, le réseau lenticulaire 8 sera également formé d'une série de lentilles sphériques juxtaposées. De même, si le réseau lenticulaire 3 est de type cylindrique, le réseau lenticulaire 8 sera également ment formé d'une série de lentilles cylindriques juxtaposées, disposées parallèlement aux différentes lignes formées sur le cliché.

Pour éviter un tel inconvénient de relief inversé, on peut rephotographier l'ensemble « négatif + système lenticulaire » en inversant le relief, puisqu'une inversion de relief inversé redonne le relief réel.

Ainsi, comme cela apparaît sur la figure 4, si l'on inverse les positions des points formés en arrière de chaque lentille, de façon que les points (og1, ag1) correspondant à des visions de gauche de l'objet, se retrouvent à droite des points (od1 et ad1) correspondant à des visions de droite de l'objet, l'observateur aura une vision correcte de celui-ci. Le rayon Og'' qui correspond au point og1 d'une vision de gauche de l'objet selon un angle d'inclinaison β par rapport à la normale au plan de l'objet 2, parvient sur l'œil gauche et, de même, le rayon Od'' qui correspond au point od1 d'une vision de droite de l'objet selon un angle d'inclinaison β par rapport à la normale au plan de l'objet 2, parvient sur l'œil droit de l'observateur.

L'image composite, comme cela est représenté sur les figures 3 et 4, est formée d'une série d'images élémentaires à raison d'une image élémentaire en arrière de chaque lentille, chaque image élémentaire étant elle-même, formée d'une série de lignes juxtaposées correspondant à une vision d'une même portion d'objets selon des angles d'observation différents.

Il apparaît, en regard des figures 3 et 4, qu'il est nécessaire, lorsque l'on observe ladite image composite à travers un réseau lenticulaire simple, convexe, que le sens gauche-droite (og1, od1) des images élémentaires soit inversée par rapport au sens gauche-droite (G, D) de l'image de l'objet.

En d'autres termes, l'image élémentaire enregistrée derrière chaque lentille cylindrique, correspond à l'image de la pupille de sortie de l'objectif (ou à l'image du lieu géométrique que décrit cette pupille par rapport au réseau lenticulaire, dans le cas d'un déplacement), il est, par conséquent, indispensable que l'image de cette pupille soit inversée par rapport au sens gauche-droite de l'image de l'objet.

Bien entendu, la correction de relief peut être obtenue à l'aide de tous dispositifs classiques, appropriés, utilisant des réseaux lenticulaires adéquates tels que ceux qui sont décrits dans la demande de brevet Français FR-A-2 196 486.

Pour remédier à l'inconvénient précité, selon un mode de réalisation de l'appareil optique conforme à la présente invention, représenté sur la figure 2, on introduit en arrière du réseau lenticulaire 3, un second réseau lenticulaire 9 de même pas que le premier réseau lenticulaire 3, mais ayant de préférence une distance focale beaucoup plus faible que le réseau lenticulaire 3 précédent. De préférence, le réseau lenticulaire 9 est disposé dans l'appareil optique, de façon que sa face cannelée soit tournée du côté de la face plane du réseau lenticulaire 3, les lentilles cylindriques du réseau lenticulaire 9, dans le cas d'utilisation d'un réseau lenticulaire 3, de type cylindrique, étant disposées parallèlement aux lentilles cylindriques du réseau lenticulaire 3.

Comme cela apparaît sur la figure 2, chaque lentille cylindrique $(9_1)$ du réseau lenticulaire 9 reprend les images $(og_1-od_1)$ formées au niveau du plan focal de la lentille correspondante $(3_1)$ du premier réseau lenticulaire 3 et en donne une nouvelle image retournée (od2-og2) au grandissement −1, sensiblement à une distance double de sa distance focale. Le réseau lenticulaire 9 est donc particulier dans la mesure où sa face plane ne correspond pas à son plan focal, mais à un plan situé sensiblement à une distance double de son plan focal par rapport à sa face cannelée.

De façon classique en soi, pour obtenir un grandissement de −1 (image de même taille mais renversée par rapport à l'objet), le second réseau lenticulaire 9 est disposé dans l'appareil de sorte que « l'objet » (image élémentaire de la première image composite, c'est-à-dire l'image de la pupille de sortie) et « l'image » (image élémentaire de la seconde image ou image orthostéréoscopique) soient situés au niveau des plans antiprincipaux des lentilles élémentaires du second réseau lenticulaire 9. Si l'on souhaite obtenir une « image » (image élémentaire de l'image orthostéréoscopique) légèrement agrandie par rapport à « l'objet », et toujours renversée, il faudra diminuer légèrement la distance du sommet du dioptre à « l'objet » et augmenter la distance du sommet du dioptre à « l'image ».

Selon le mode de réalisation de l'appareil optique représenté sur la figure 2, on place au niveau de la deuxième image composite (image composite orthostéréoscopique) formée à une distance double de la distance focale du réseau lenticulaire 9, une émulsion photographique 6 portée par un support 7.

Après traitement photographique, il suffit d'éclairer l'émulsion photographique et d'observer celle-ci à travers un réseau lenticulaire d'observation de même pas que le premier réseau lenticulaire utilisé pour l'enregistrement et disposé de façon similaire au réseau lenticulaire 8 précédemment décrit en regard de la figure 4, pour observer une image en relief correct de l'objet 2.

De préférence l'angle de champ de ce réseau lenticulaire d'observation devra être égal à l'angle d'ouverture de la pupille d'entrée de l'objectif vu de l'objet 2.

C'est-à-dire que, d'une part, l'observateur immobile aura une impression de relief, ses deux yeux recevant des images légèrement différentes, correspondant à des angles légèrement différents d'observation d'un même objet, et le cerveau reconstruisant sur cette base le volume spatial. D'autre part, un observateur mobile vis-à-vis de l'émulsion et du réseau lenticulaire d'observation, aura l'impression de « tourner » autour de l'objet, puisqu'il observera l'objet sous des angles changeants en fonction de sa position.

Bien entendu, comme cela est enseigné, en particulier, dans le brevet Français FR-A-2 097 205, il est également possible d'utiliser tous moyens classiques permettant de projeter l'image sur un réseau lenticulaire de visualisation, l'émulsion 6 n'étant plus en contact avec le réseau lenticulaire d'observation 8.

En fait, il s'est avéré préférable de donner au premier réseau lenticulaire 3 un angle de champ $2\alpha$ légèrement supérieur à l'angle $2\gamma$ sous lequel l'ouverture de la pupille de sortie est vue du plan image, de façon, d'une part, à ne pas couvrir tout à fait la totalité du plan focal du réseau lenticulaire 3, afin d'éviter le recouvrement d'informations à ce niveau, d'autre part, d'éviter les brouillages d'informations qui pourraient être dus au second réseau lenticulaire 9, si celui-ci était légèrement décalé par rapport au premier, ou aux défauts de réalisation de celui-ci si, par exemple, sa face plane était située à une distance légèrement supérieure à la distance double de sa distance focale, provoquant ainsi un grandissement absolu légèrement supérieur à un.

On comprend ainsi qu'il est plus aisé de jouer sur l'angle de champ du second réseau et sur sa distance focale de façon à obtenir, au niveau de sa face plane, une image composite couvrant la totalité du format de l'image, sans recouvrement.

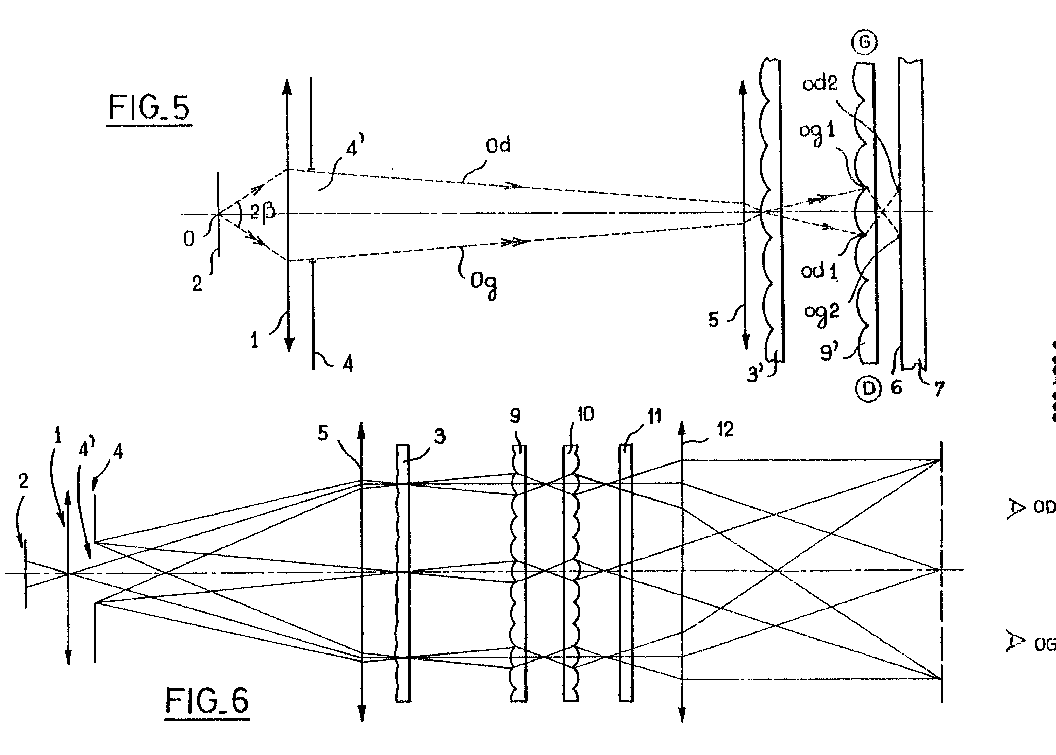

Selon les différents modes de réalisation de l'appareil optique qui viennent d'être décrits, celui-ci utilise des systèmes lenticulaires dits « dioptriques », c'est-à-dire des systèmes dans lesquels les différentes images composites sont formées au niveau de la face plane du système lenticulaire. Si l'emploi de tels systèmes s'avère être préférable, il n'en reste pas moins, que, comme cela apparaît sur la figure 5, des appareils optiques conformes à la présente invention peuvent parfaitement être réalisés à l'aide de systèmes lenticulaires ne présentant pas cette caractéristique, c'est-à-dire des systèmes lenticulaires pour lesquels la face plane ne correspond plus au plan de l'image composite (le système lenticulaire est alors dit de type « lentilles minces »).

Ainsi, on retrouve sur la figure 5 qui représente un appareil optique similaire à l'appareil optique représenté sur la figure 2, l'objectif 1 et sa pupille de sortie 4', qui donne de l'objet 2 une image agrandie au niveau de la face cannelée du réseau lenticulaire 3' formé d'un dispositif du type « lentilles minces » précité, en avant duquel est disposée une lentille de champ 5, de façon à former, au niveau du plan focal du réseau lenticulaire 3', une image composite de l'objet 2.

Selon la présente invention, le réseau lenticulaire 3' possède un angle de champ $2\alpha$ sensiblement égal à l'angle $2\gamma$ précité, qui correspond à l'angle sous lequel l'ouverture 4' de la pupille de sortie 4 de l'objectif 1 est vue à partir du plan image. Ainsi, les rayons lumineux provenant de l'objet 2, traversant l'objectif 1, l'ouverture de sa pupille de sortie 4 et la lentille de champ 5, couvrent la quasi-totalité de l'angle de champ $2\alpha$ du réseau lenticulaire 3'.

De plus, comme cela est représenté sur la figure 5, un réseau lenticulaire 9' du type « lentille mince » précité est introduit entre le réseau lenticulaire 3' et une émulsion photographique 6, de façon similaire à l'appareil optique représenté sur la figure 2. Ce réseau lenticulaire 9' a pour but, comme le réseau lenticulaire 9 de la figure 2, de reprendre les images formées à l'arrière de chacune des lentilles du premier réseau lenticulaire 3', au niveau du plan focal de celui-ci, et d'en donner une nouvelle image retournée de grandissement $-1$, à une distance double de sa distance focale, de façon à former une image composite de relief correct (dite seconde image composite).

Selon un autre mode de réalisation, non représenté sur les figures, l'appareil optique, peut comporter, après l'objectif, un dispositif classique à miroir ou à prisme, tel qu'un prisme dit de Wollaston ou de Dove, pour effectuer un retournement de l'image, gauche/droite, et haut/bas. Il convient, cependant, de noter qu'une telle inversion n'est pas réellement gênante dans le cadre de la prise de vue, le retournement de l'image étant aisément réalisé lorsque l'émulsion ayant subi un traitement photographique, celle-ci est positionnée en vue de l'observation. Par contre, l'utilisation de dispositifs redresseurs sera d'un grand intérêt, dans le cas d'observations visuelles directes, comme cela apparaîtra dans la suite de la description.

On va maintenant décrire un autre mode de réalisation de l'appareil optique de la présente invention, représenté sur la figure 6, permettant l'observation directe. De façon similaire à l'appareil optique représenté sur les figures 2 et 4, on retrouve l'objectif 1 et son diaphragme 4, qui donne de l'objet 2 une image agrandie au niveau de la face cannelée du réseau lenticulaire 3, en amont duquel est disposé une lentille de champ 5, de façon à former, au niveau du plan focal de ce réseau lenticulaire 3, la première image composite correspondant à une image en relief inversée. Un réseau lenticulaire 9 de même pas que le réseau lenticulaire 3 reprend les images (og1-od1) formées au niveau du plan focal de la lentille correspondante du premier réseau lenticulaire et en donne une nouvelle image retournée (od2-og2) au grandissement $-1$ à une distance double de sa distance focale (dite seconde image composite).

La seconde image composite ainsi formée répond donc à la caractéristique précédemment définie, nécessaire pour réaliser une vision en relief correcte à savoir que le sens gauche-droite des images élémentaires soit inversé par rapport au sens gauche-droite de l'image de l'objet.

Au niveau de cette seconde image composite, on place, à la différence de l'appareil optique représenté sur la figure 2, non pas une émulsion photographique 6, mais le plan focal d'un réseau lenticulaire d'observation 10, analogue au réseau lenticulaire d'observation décrit en regard des figures 3 et 4, réseau lenticulaire d'observation 10 qui est positionné de façon que sa face plane soit orientée vers l'objectif.

Le réseau lenticulaire d'observation 10 doit donc posséder le même pas que les réseaux lenticulaires précédents 3 et 9, mais possédera avantageusement une épaisseur beaucoup plus faible.

Comme cela apparaîtra dans la suite de la description, le réseau lenticulaire d'observation 10 possédera avantageusement un angle de champ égal à l'angle $2\beta$ qui correspond à l'angle sous lequel l'ouverture de la pupille d'entrée est vue de l'objet 2.

Dans le cas où le réseau lenticulaire d'observation 10 est formé d'une série de lentilles cylindriques convexes juxtaposées, l'appareil optique comporte, en outre, comme cela est représenté sur la figure 6, un quatrième réseau lenticulaire 11, formé d'une série de lentilles cylindriques juxtaposées, qui joue le rôle d'épanouisseur de faisceau. A cette fin, l'axe longitudinal des lentilles cylindriques du réseau lenticulaire 11 est disposé perpendiculairement à l'axe longitudinal des lentilles élémentaires des réseaux lenticulaires 3, 9 et 10 précédemment cités.

En effet, si un observateur tente d'examiner ladite seconde image composite retournée à travers le réseau lenticulaire d'observation 10, sans utiliser de réseau lenticulaire jouant le rôle d'épanouisseur de faisceau, il ne pourra observer qu'une ligne horizontale formée par les rayons situés dans le plan de ses yeux. Pour voir une ligne horizontale avoisinante, l'observateur devra donc se déplacer verticalement.

Par contre, cet inconvénient est résolu en utilisant le réseau lenticulaire épanouisseur de faisceau 11 précédemment cité. L'utilisation de celui-ci est basée sur la constatation suivante : Si on observe à l'œil nu, une source lumineuse ponctuelle ou de faible étendue angulaire à travers le système lenticulaire ; la dimension apparente de la source augmente dans le sens perpendiculaire à l'axe des lentilles cylindriques, mais reste pratiquement constante dans le sens parallèle à cet axe. Par conséquent, l'axe des lentilles cylindriques du réseau lenticulaire étant disposé horizontalement par rapport à la position normale des yeux de l'observateur, tel que représenté sur la figure 6, le réseau lenticulaire 11, épanouisseur de faisceau, ne modifie aucunement la largeur de l'objet (sens parallèle à l'axe des lentilles cylindriques), mais par contre rabat les rayons vers les yeux de façon que l'observateur voit la totalité de l'image de l'objet.

En outre, l'appareil optique comporte, en aval du réseau lenticulaire 11, un oculaire 12, qui, fonctionnellement a pour but de renvoyer l'image à une distance d'observation convenable pour l'œil.

Une autre façon de résoudre l'inconvénient précité consiste à introduire, dans un appareil prévu pour l'observation directe un « dépoli » situé au niveau de la seconde image composite entre le second réseau lenticulaire 9 et le réseau lenticulaire d'observation 10. Cette variante s'avère certes moins lumineuse mais présente l'avantage d'offrir une plage d'observation pour une pluralité d'observateurs.

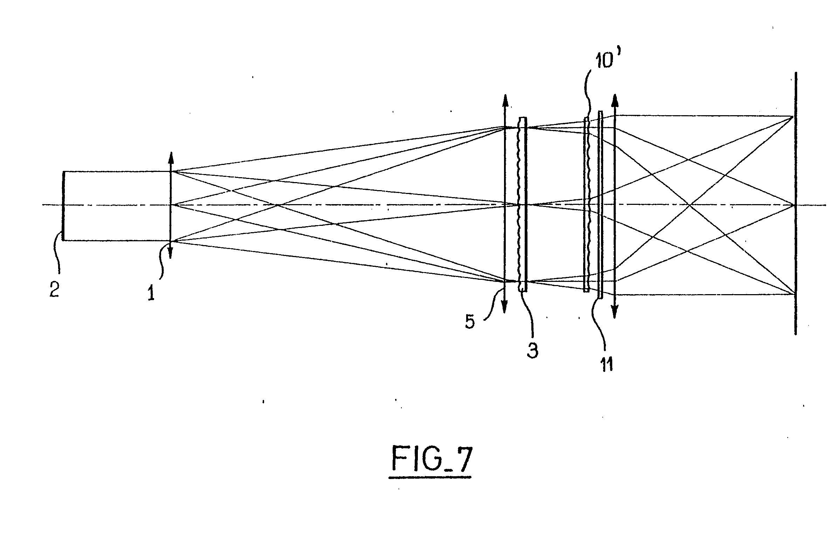

On va maintenant décrire une autre variante de réalisation de la présente invention qui est représentée sur la figure 7.

On retrouve là encore l'objectif diaphragmé 1 qui donne de l'objet 2 une image agrandie au niveau de la face cannelée du réseau lenticulaire 3, en amont duquel est disposée une lentille de champ 5, de façon à former, au niveau du plan focal de ce réseau lenticulaire 3, l'image composite correspondant à une image en relief inversé. Cependant selon le mode de réalisation de la figure 7, le relief correct n'est pas obtenu à l'aide de réseaux lenticulaires convexes comme cela a été décrit précédemment mais à l'aide d'un réseau lenticulaire concave 10' jouant également le rôle de réseau lenticulaire d'observation. La face cannelée du réseau lenticulaire 10' est disposée au voisinage du plan focal du premier réseau lenticulaire 3. De plus, dans la mesure où le réseau lenticulaire 10' est du type cylindrique, le dispositif optique représenté sur la figure 7 doit en outre comporter un réseau épanouisseur de faisceau 11 tel que précédemment décrit. Enfin, il est prévu un oculaire 12 en aval du réseau lenticulaire 11.

Bien entendu, dans le cas où on utilise des réseaux lenticulaires (3, 9, 10) constitués eux-mêmes de deux réseaux lenticulaires formés de lentilles cylindriques disposées perpendiculairement, ou un réseau sphérulé, de façon à enregistrer et restituer le relief non plus dans une direction, mais dans deux directions le réseau lenticulaire 11 épanouisseur de faisceau devient inutile.

Une telle généralisation s'applique notamment au cas de fort grossissement tel que le cas de la microscopie (g supérieur à 20). En effet dans ce cas le phénomène physique de la diffraction devient prépondérant et il s'avère indispensable d'utiliser deux réseaux lenticulaires de type cylindrique, croisés, ou un réseau lenticulaire de type sphérique pour éviter les problèmes de diffraction en créant en quelque sorte une deuxième sélection. Dans ce cas la pupille d'entrée de l'objectif prendra une section carrée ou circulaire de faibles dimensions. Cette disposition permet d'une part d'obtenir un « relief intégral » dans toutes les directions, d'autre part, d'obtenir une meilleure profondeur de champ.

Selon une variante de réalisation, la lentille de champ 5 peut être supprimée. Il convient alors (la périodicité de la première image composite étant différente de celle du premier réseau lenticulaire) d'utiliser un réseau lenticulaire inverseur 9 dont le pas est supérieur à celui du premier réseau lenticulaire 3. Le réseau lenticulaire d'observation 10 doit être lui aussi d'un pas différent et supérieur à ceux des réseaux lenticulaires précités 3 et 9. L'accroissement de ces pas est calculé suivant les lois simples de la géométrie.

Selon une variante de réalisation, pour l'observation visuelle directe, le réseau lenticulaire inverseur 9 et le réseau lenticulaire d'observation 10, tous deux de type convergent, peuvent être remplacés par un seul réseau lenticulaire 10′ de type concave ou divergent. Dans cette variante si on supprime la lentille de champ 5, le pas du réseau lenticulaire 10′ devra être supérieur à celui du premier réseau lenticulaire 3. L'accroissement de ce pas est là encore calculé suivant les lois simples de la géométrie.

L'appareil optique qui vient d'être décrit en regard de la figure 7 présente l'inconvénient de donner une image retournée par rapport à l'objet, c'est-à-dire une inversion gauche/droite, haut/bas. Bien entendu, un tel inconvénient peut, cependant, aisément être résolu en plaçant après l'objectif, un dispositif de redressement de l'image, du type dispositif à miroir ou à prime, tel qu'un prisme du genre Wollaston ou Dove.

L'appareil optique de la présente invention présente, en outre, l'avantage de permettre aisément une modification de relief, de l'objet observé, c'est-à-dire que ledit appareil permet, soit d'obtenir un relief atténué (hypostéréoscopie), soit un relief exagéré (hyperstéréoscopie).

En effet, si l'angle de champ du réseau lenticulaire d'observation (10, 10′) est égal à l'angle 2β sous lequel l'ouverture de la pupille d'entrée est vue de l'objet 2, l'observateur, à l'observation, aura l'impression de tourner autour de l'objet d'un angle égal à l'angle 2β d'ouverture, de prise de vue. Le relief sera, par conséquent, correct (un cube est un cube). Si maintenant, l'angle d'ouverture de prise de vue ou l'angle 2β sous lequel est vue l'ouverture de la pupille d'entrée de l'objet, est inférieur à l'angle de champ du réseau lenticulaire d'observation (10, 10′), le relief observé sera atténué, puisque correspondant à un angle d'enregistrement plus faible. A l'observation, cependant, l'observateur « tournera » toujours autour de l'objet d'un angle correspondant à l'angle de champ du réseau lenticulaire. Ainsi, lorsque l'observateur sera placé de façon à observer un rayon limite de l'angle de champ du réseau lenticulaire d'observation, il observera un rayon fictif provenant de l'objet 2 selon un angle d'observation inférieur, d'où l'impression de relief atténué, et impression d'hypostéréoscopie.

De même, si l'angle d'ouverture de prise de vue ou l'angle 2β sous lequel est vue l'ouverture de la pupille d'entrée, de l'objet, est supérieur à l'angle de champ du réseau lenticulaire d'observation, le relief enregistré sera augmenté, puisque correspondant à un angle de rotation plus élevé. A l'observation cependant, l'observateur « tournera » toujours autour de l'objet d'un angle correspondant à l'angle de champ du réseau lenticulaire. Ainsi, lorsque l'observateur sera placé de façon à observer un rayon limite de l'angle de champ du réseau lenticulaire d'observation, il observera en réalité un rayon correspondant à une vision de l'objet selon un angle supérieur, d'où l'impression de relief exagéré, et d'hyperstéréoscopie.

Bien entendu, l'effet inverse est obtenu en modifiant l'angle de champ du réseau lenticulaire d'observation.

En réduisant cet angle de champ du réseau lenticulaire d'observation, sans modifier l'angle de prise de vue, on obtiendra une hyperstéréoscopie.

En augmentant cet angle de champ du réseau lenticulaire d'observation, sans modifier l'angle de prise de vue on obtiendra une hypostéréoscopie.

Dans tous les modes de réalisation de l'appareil optique conforme à la présente invention, les systèmes lenticulaires peuvent être formés soit de systèmes dits « dioptriques », soit de systèmes de type « lentilles minces ».

Bien entendu, le rapport de grandissement de l'appareil peut être aisément modifié en modifiant la focale de l'objectif.

D'autre part, on sait que dans les systèmes optiques classiques, si le grandissement linéaire transversal est défini par g, le grandissement axial sera en $g^2$. Dans une certaine mesure, les différents réseaux lenticulaires utilisés dans le cadre de la présente invention permettent avantageusement de modifier le grandissement axial sans toucher au grandissement transversal afin de redonner un relief sensiblement correct.

Cependant selon une caractéristique avantageuse de la présente invention l'objectif 1 et la lentille de champ 5 sont positionnés dans l'appareil optique de façon à former un système afocal, c'est-à-dire que l'intervalle optique existant entre le foyer image de l'objectif et le foyer objet de la lentille de champ soit nul. Dans un tel cas, le grandissement linéaire transversal est constant, il en est donc de même du grandissement axial. Ainsi les réseaux lenticulaires qui suivent ce système afocal peuvent être disposés de façon à corriger le grandissement axial de l'appareil (pour rendre le grandissement axial de l'appareil égal au grandissement transversal) quelle que soit la plage d'observation. Avec une telle disposition l'image d'un objet en forme de cube correspondant à un cube parfait.

Bien entendu, la présente invention n'est pas limitée aux modes de réalisation qui viennent d'être décrits, à partir desquels on pourra prévoir d'autres formes et d'autres modes de réalisation, sans pour cela sortir du cadre de la présente invention. Par exemple on pourra aisément remplacer la lentille de champ par un miroir sphérique.

## Revendications

1. Procédé permettant d'obtenir instantanément des images agrandies stéréoscopiques d'objets, consistant :

a) à former à l'aide d'un objectif fixe (1) une image d'un objet (2), au voisinage des lentilles élémentaires d'un premier réseau lenticulaire (3), de façon à créer une image échantillonnée composite, au niveau du plan focal du premier réseau lenticulaire,

b) à former une image composite orthostéréoscopique à partir de l'image échantillonnée composite à l'aide d'un second réseau lenticulaire (9, 10'), disposé après le plan focal du premier réseau,

c) à observer l'image composite orthostéréoscopique ainsi formée à l'aide d'un réseau lenticulaire d'observation (10, 10'), les pas des différents réseaux lenticulaires étant sensiblement égaux, caractérisé par le fait que l'on forme, à l'aide de l'objectif (1) une image agrandie de l'objet, que les lentilles du premier réseau lenticulaire (3) possèdent chacune un angle de champ (2α) sensiblement égal à l'angle (2γ) d'ouverture de la pupille de sortie de l'objectif vue depuis ledit premier réseau lenticulaire (3), et que l'on choisit le réseau lenticulaire d'observation (10, 10') de façon telle que ses lentilles possèdent un angle de champ sensiblement égal à l'angle (2β) d'ouverture de la pupille d'entrée de l'objectif (1) vue depuis l'objet (2).

2. Procédé selon la revendication 1, caractérisé par le fait qu'il comporte en outre l'étape intermédiaire qui consiste à enregistrer l'image agrandie composite orthostéréoscopique sur une pellicule photographique.

3. Procédé selon l'une des revendications 1 et 2, caractérisé par le fait que les lentilles des réseaux lenticulaires (3, 9) sont cylindriques et que l'objectif (1) comprend un diaphragme qui forme une fente fine.

4. Procédé selon l'une des revendications 1 et 2, caractérisé par le fait que les lentilles des réseaux lenticulaires (3, 9) sont de type sphérique ou fonctionnellement équivalent, et que le diaphragme est de forme sensiblement rectangulaire.

5. Appareil optique pour la mise en œuvre du procédé selon l'une des revendications 1 et 2, caractérisé par le fait qu'il comporte un objectif diaphragmé (1, 4), fixe, donnant d'un objet (2) une image agrandie, un premier réseau lenticulaire (3) dont les lentilles élémentaires sont placées au voisinage du plan de ladite image agrandie, par le fait que l'angle de champ (2α) des lentilles élémentaires dudit premier réseau lenticulaire est sensiblement égal à l'angle (2υ) d'ouverture de la pupille de sortie (4') de l'objectif vue depuis le premier réseau lenticulaire (3), par le fait qu'il comprend, après le plan focal du premier réseau lenticulaire (3), un second réseau lenticulaire (9), destiné à inverser les images élémentaires formées par chaque lentille du premier réseau lenticulaire et à donner une image composite orthostéréoscopique, et par le fait qu'il est prévu un réseau lenticulaire d'observation (10) de l'image composite orthostéréoscopique, dont les lentilles élémentaires possèdent un angle de champ sensiblement égal à l'angle (2β) d'ouverture de la pupille d'entrée de l'objectif (1) vue depuis l'objet (2), les pas des différents réseaux lenticulaires étant sensiblement égaux.

6. Appareil optique selon la revendication 5, caractérisé par le fait que le premier réseau lenticulaire (3) est formé d'une série de lentilles cylindriques convexes juxtaposées.

7. Appareil optique selon la revendication 5, caractérisé par le fait que le premier réseau lenticulaire (3) est formé de lentilles convexes, de type sphérique, juxtaposées.

8. Appareil optique selon la revendication 5, caractérisé par le fait que le dispositif formant ledit premier réseau lenticulaire (3) est constitué de deux réseaux lenticulaires élémentaires, accolés, constitués chacun d'une série de lentilles cylindriques convexes juxtaposées, les deux réseaux lenticulaires élémentaires étant accolés dans une position telle que les axes des lentilles respectives soient orientés perpendiculairement.

9. Appareil optique selon l'une des revendications 5 à 8, caractérisé par le fait qu'une émulsion photographique (6) est disposée au niveau de l'image composite orthostéréoscopique.

10. Appareil optique selon l'une des revendications 5 à 8, caractérisé par le fait que le réseau lenticulaire d'observation (10) est disposé de façon telle que son plan focal soit confondu avec l'image composite orthostéréoscopique.

11. Appareil optique selon l'une des revendications 5 à 8 et 10, caractérisé par le fait que le réseau lenticulaire d'observation (10) est formé de lentilles cylindriques convexes juxtaposées, disposées parallèlement aux lentilles cylindriques des deux premiers réseaux (3, 9).

12. Appareil optique selon l'une des revendications 5 à 8, caractérisé par le fait que le second réseau lenticulaire et le réseau lenticulaire d'observation (10') sont formés du même réseau lenticulaire, les lentilles élémentaires dudit réseau lenticulaire possèdent un angle de champ sensiblement égal à l'angle (2β) d'ouverture de la pupille d'entrée de l'objectif (1) vu de l'objet (2), ledit réseau (10') étant formé de lentilles concaves juxtaposées, disposées en vis-à-vis des lentilles du premier réseau (3) et ledit réseau (10') étant disposé après le plan focal du premier réseau lenticulaire (3).

13. Appareil optique selon la revendication 12, caractérisé par le fait que ledit réseau à lentilles concaves (10') est de type cylindrique.

14. Appareil optique selon l'une des revendications 5 à 8, 10 et 11, caractérisé par le fait qu'il est prévu en outre un dépoli au niveau de l'image composite orthostéréoscopique.

15. Appareil optique selon l'une des revendications 5 à 8, 10 et 12, caractérisé par le fait que le réseau lenticulaire d'observation (10) est formé de lentilles sphériques juxtaposées.

16. Appareil optique selon l'une des revendications 5 à 8, 10 et 12, caractérisé par le fait que le réseau lenticulaire d'observation (10) est formé de deux réseaux lenticulaires élémentaires, accolés, constitués chacun d'une série de lentilles cylindriques juxtaposées, les deux réseaux lenticulaires élémentaires étant accolés dans une position telle que les axes des lentilles respectives soient orientées perpendiculairement.

17. Appareil optique selon l'une des revendications 5 à 8 et 10 à 13, caractérisé par le fait qu'il est prévu un réseau lenticulaire (11), jouant le rôle d'épanouisseur de faisceau, dont les lentilles cylindriques sont disposées perpendiculairement aux lentilles cylindriques du premier réseau (3).

18. Appareil optique selon l'une des revendications 5 à 15, caractérisé par le fait qu'une lentille de champ (5) de même format que le premier réseau lenticulaire (3) ou un élément fonctionnellement analogue est disposé en amont de celui-ci et par le fait que tous les réseaux lenticulaires (3, 9, 10, 10') possèdent un pas identique.

19. Appareil optique selon la revendication 18, caractérisé par le fait que l'objectif (1) et la lentille de champ (5) forment un système afocal.

20. Appareil optique selon l'une des revendications 5 à 8 et 10 à 19, caractérisé par le fait qu'un oculaire (12) est disposé en aval du dernier réseau lenticulaire.

21. Appareil optique selon l'une des revendications 5 à 20, caractérisé par le fait qu'un dispositif redresseur est disposé en amont de l'objectif (1), de façon à redresser l'image échantillonnée composite.

22. Appareil optique selon la revendication 21, caractérisé par le fait que le dispositif redresseur est du genre prisme Wollaston ou de Dove.

23. Appareil optique selon la revendication 21, caractérisé par le fait que le dispositif redresseur est un dispositif à miroir.

## Claims

1. Method making it possible to obtain instantaneously enlarged stereoscopic images of objects, consisting :

a) of forming by means of a fixed objective (1) an image of an object (2), in the vicinity of the elementary lenses of a first lenticular array (3), in order to create a composite made-up image, at the level of the focal plane of the first lenticular array.

b) of forming a composite orthostereoscopic image from the composite made-up image by means of a second lenticular array (9, 10'), located after the focal plane of the first array.

c) of observing the composite orthostereoscopic image formed in this way by means of an observation lenticular array (10, 10'), the steps of the different lenticular arrays being substantially equal, characterised by the fact that one forms, by means of the objective (1), an enlarged image of the object, that the lenses of the first lenticular array (3) each have a field angle $(2\alpha)$ substantially equal to the opening angle $(2\gamma)$ of the outlet pupil of the objective seen from the said first lenticular array (3) and that the observation lenticular array (10, 10') is chosen so that its lenses have a field angle substantially equal to the opening angle $(2\beta)$ of the inlet pupil of the objective (1) seen from the object (2).

2. Method according to Claim 1, characterised by the fact that it also comprises the intermediate stage which consists of recording the enlarged composite orthostereoscopic image on a photographic film.

3. Method according to one of Claims 1 and 2, characterised by the fact that the lenses of the lenticular arrays (3, 9) are cylindrical and that the objective (1) comprises a diaphragm which forms a fine slot.

4. Method according to one of Claims 1 and 2, characterised by the fact that the lenses of the lenticular arrays (3, 9) are of a spherical or functionally equivalent type and that the diaphragm is of a substantially rectangular shape.

5. Optical apparatus for carrying out the method according to one of Claims 1 and 2, characterised by the fact that it comprises a fixed objective (1, 4) having a diaphragm, giving an object (2) an enlarged image, a first lenticular array (3) whereof the elementary lenses are placed in the vicinity of the plane of the said enlarged image, by the fact that the field angle $(2\alpha)$ of the elementary lenses of the said first lenticular array is substantially equal to the angle of opening $(2\gamma)$ of the outlet pupil (4') of the objective seen from the first lenticular array (3), by the fact that it comprises, after the focal plane of the first lenticular array (3), a second lenticular array (9), intended to invert the elementary images formed by each lens of the first lenticular array and to give a composite orthostereoscopic image and by the fact that an observation lenticular array (10) is provided for the composite orthostereoscopic image, whereof the elementary lenses have a field angle substantially equal to the angle of opening $(2\beta)$ of the inlet pupil of the objective (1) seen from the object (2), the steps of the various lenticular arrays being substantially equal.

6. Optical apparatus according to Claim 5, characterised by the fact that the first lenticular array (3) is formed by a series of juxtaposed, convex, cylindrical lenses.

7. Optical apparatus according to Claim 5, characterised by the fact that the first lenticular array (3) is formed of juxtaposed, convex lenses of spherical type.

8. Optical apparatus according to Claim 5, characterised by the fact that the device forming the said first lenticular array (3) is constituted by two elementary lenticular arrays, which are stuck together, each constituted by a series of juxtaposed, convex, cylindrical lenses, the two elementary lenticular arrays being stuck together in a position such that the axes of the respective lenses are orientated perpendicularly.

9. Optical apparatus according to one of Claims 5 to 8, characterised by the fact that a photographic emulsion (6) is located at the level of the composite orthostereoscopic image.

10. Optical apparatus according to one of Claims 5 to 8, characterised by the fact that the observation lenticular array (10) is arranged so that its focal plane coincides with the composite orthostereoscopic image.

11. Optical apparatus according to one of Claims 5 to 8 and 10, characterised by the fact that the observation lenticular array (10) is formed of juxtaposed, convex, cylindrical lenses, arranged parallel to the cylindrical lenses of the two first arrays (3, 9).

12. Optical apparatus according to one of Claims 5 to 8, characterised by the fact that the second lenticular array and the observation lenticular array (10') are formed of the same lenticular array, the elementary lenses of the said array having a field angle substantially equal to the angle of opening (2β) of the inlet pupil of the objective (1), seen from the object (2), the said array (10') being formed by juxtaposed concave lenses, arranged opposite the lenses of the first array (3) and the said array (10') being arranged after the focal plane of the first lenticular array (3).

13. Optical apparatus according to Claim 12, characterised by the fact that the said array comprising concave lenses (10') is of the cylindrical type.

14. Optical apparatus according to one of Claims 5 to 8, 10 and 11, characterised by the fact that a depolished area is also provided at the level of the composite or orthostereoscopic image.

15. Optical apparatus according to one of Claims 5 to 8, 10 and 12, characterised by the fact that the observation lenticular array (10) is formed by juxtaposed spherical lenses.

16. Optical apparatus according to one of Claims 5 to 8, 10 and 12, characterised by the fact that the observation lenticular array (10) is formed by two elementary lenticular arrays, stuck together, each constituted by a series of juxtaposed cylindrical lenses, the two elementary lenticular arrays being stuck together in a position such that the axes of the respective lenses are orientated perpendicularly.

17. Optical apparatus according to one of Claims 5 to 8 and 10 to 13, characterised by the fact that a lenticular array (11) is provided, fulfilling the function of a beam spreader, where of the cylindrical lenses are arranged perpendicularly to the cylindrical lenses of the first array (3).

18. Optical apparatus according to one of Claims 5 to 15, characterised by the fact that a field lens (5) of the same format as the first lenticular array (3) or a functionally similar member is arranged upstream of the latter and by the fact that all the lenticular arrays (3, 9, 10, 10') have an identical step.

19. Optical apparatus according to Claim 18, characterised by the fact that the objective (1) and the field lens (5) form an afocal system.

20. Optical apparatus according to one of Claims 5 to 8 and 10 to 19, characterised by the fact that an ocular (12) is arranged downstream of the last lenticular array.

21. Optical apparatus according to one of Claims 5 to 20, characterised by the fact that a rectifier device is arranged upstream of the objective (1), in order to rectify the composite made-up image.

22. Optical apparatus according to Claim 21, characterised by the fact that the rectifier device is of the type comprising a Wollaston or Dove prism.

23. Optical apparatus according to Claim 21, characterised by the fact that the rectifier device is a device comprising a mirror.

**Patentansprüche**

1. Verfahren für die unmittelbare Gewinnung vergrößerter stereoskopischer Bilder von Objekten, mit :

a) Erzeugen eines Bildes eines Objektes (2) mittels eines festen Objektives (1) in der Nähe der Elementarlinsen eines ersten linsenförmigen Beugungsgitters (3), um auf der Höhe der Brennebene des ersten linsenförmigen Beugungsgitters ein zusammengesetztes Probenbild zu schaffen,

b) Erzeugen eines zusammengesetzten Orthostereoskopen Bildes aus dem zusammengesetzten Probenbild mittels eines nach der Trennebene des ersten Beugungsgitters angeordneten zweiten linsenförmigen Beugungsgitters (9, 10'),

c) Beobachten des so erzeugten zusammengesetzten orthostereoskopen Bildes mittels eines linsenförmigen Beobachtungs-Beugungsgitters (10, 10'), wobei die Schritte bzw. Teilungen der verschiedenen linsenförmigen Beugungsgitter im wesentlichen gleich sind, dadurch gekennzeichnet, daß man mittels des Objektives (1) ein vergrößertes Bild des Objektes erzeugt, daß die Linsen des ersten linsenförmigen Beugungsgitters (3) jeweils einen Feld- bzw. Gesichtswinkel (2α) besitzen, der im wesentlichen gleich ist zu dem Öffnungswinkel (2γ) der Austrittspupille des Objektives von dem ersten linsenförmigen Beugungsgitter (3) aus gesehen, und daß man das linsenförmige Beobachtungs-Beugungsgitter (10, 10') so wählt, daß seine Linsen einen Feldwinkel besitzen, der im wesentlichen gleich ist zu dem Öffnungswinkel (2β) der Eintrittspupille des Objektives (1) von dem Objekt (2) aus gesehen.

2. Verfahren nach Anspruch 1, dadurch gekennzeichnet, daß außerdem ein Zwischenschritt vorgesehen ist, der in einer Aufzeichnung des vergrößerten zusammengesetzten Orthostereoskopen Bildes auf einem photographischen Film besteht.

3. Verfahren nach einem der Ansprüche 1 und 2, dadurch gekennzeichnet, daß die Linsen der linsenförmigen Beugungsgitter (3, 9) zylindrisch sind, und daß das Objektiv (1) ein Diaphragma aufweist, das einen feinen Spalt bildet.

4. Verfahren nach einem der Ansprüche 1 und 2, dadurch gekennzeichnet, daß die Linsen der linsenförmigen Beugungsgitter (3, 9) vom spärischen Typ sind oder entsprechend arbeiten, und daß das Diaphragma eine im wesentlichen rechteckige Gestalt hat.

5. Optisches Gerät zur Durchführung des Verfahrens nach einem der Ansprüche 1 und 2, dadurch gekennzeichnet, daß es ein membranartiges, festes Objektiv (1, 4), das von einem Objekt (2) ein vergrößertes Bild liefert, ein erstes linsenförmiges Beugungsgitter (3), dessen Elementarlinsen in der Nähe der Ebene des vergrößerten Bildes angeordnet sind, aufweist, daß der Feldwinkel (2α) der Elementarlinsen des ersten linsenförmigen Beugungsgitters im wesentlichen gleich zu dem Öffnungswinkel (2γ) der Austrittspupille (4') des Objektives vom ersten linsenförmigen Beugungsgitter (3) aus gesehen ist, daß es nach der Brennebene des ersten linsenförmigen Beugungsgitters (3) ein zweites linsenförmiges Beugungsgitter (9) aufweist, das zum Umkehren der durch jede Linse des ersten linsenförmigen Beugungsgitters erzeugten Elementarbilder und zum Liefern eines zusammengesetzten orthostereoskopen Bileds bestimmt ist, und daß ein linsenförmiges Beobachtungs-Beugungsgitter (10) für das zusammengesetzte Orthostereoskopen Bild vorgesehen ist, dessen Elementarlinsen einen Feldwinkel besitzen, der im wesentlichen gleich ist zu dem Öffnungswinkel (2β) der Eintrittspupille des Objektivs (1) von dem Objekt (2) aus gesehen, wobei die Schritte bzw. Teilungen der verschiedenen linsenförmigen Beugungsgitter im wesentlichen gleich sind.

6. Optisches Gerät nach Anspruch 5, dadurch gekennzeichnet, daß das erste linsenförmige Beugungsgitter (3) aus einer Reihe nebeneinander angeordneter konvexer Zylinderlinsen hergestellt ist.

7. Optisches Gerät nach Anspruch 5, dadurch gekennzeichnet, daß das erste linsenförmige Beugungsgitter (3) aus nebeneinander angeordneten konvexen Linsen vom sphärischen Typ hergestellt ist.

8. Optisches Gerät nach Anspruch 5, dadurch gekennzeichnet, daß die das erste linsenförmige Beugungsgitter (3) bildende Vorrichtung aus zwei verbundenen bzw. verkitteten linsenförmigen Elementarbeugungsgittern besteht, die jeweils aus einer Reihe von nebeneinander angeordneten konvexen Zylinderlinsen gebildet sind, wobei die beiden linsenförmigen Elementarbeugungsgitter derart in einer Position verbunden sind, daß die jeweiligen Linsenachsen senkrecht ausgerichtet sind.

9. Optisches Gerät nach einem der Ansprüche 5 bis 8, dadurch gekennzeichnet, daß eine photographische Emulsion (6) auf der Höhe des zusammengesetzten orthostereoskopen Bildes angeordnet ist.

10. Optisches Gerät nach einem der Ansprüche 5 bis 8, dadurch gekennzeichnet, daß das linsenförmige Beobachtungs-Beugungsgitter (10) derart angeordnet ist, daß seine Brennebene mit dem zusammengesetzten orthostereoskopen Bild vermischt ist bzw. zusammenfällt.

11. Optische Vorrichtung nach einem der Ansprüche 5 bis 8 und 10, dadurch gekennzeichnet, daß das linsenförmige Beobachtungs-Beugungsgitter (10) aus nebeneinander liegenden konvexen Zylinderlinsen besteht, die parallel zu den Zylinderlinsen der beiden ersten Beugungsgitter (3, 9) angeordnet sind.

12. Optisches Gerät nach einem der Ansprüche 5 bis 8, dadurch gekennzeichnet, daß das zweite linsenförmige Beugungsgitter und das linsenförmige Beobachtungs-Beugungsgitter (10') aus demselben linsenförmigen Beugungsgitter gebildet sind, wobei die Elementarlinsen dieses Beugungsgitters einen Feldwinkel besitzen, der im wesentlichen gleich ist zu dem Öffnungswinkel (2β) der Eintrittspupille des Objektivs (1) von dem Objekt (2) aus gesehen, wobei dieses Beugungsgitter (10') aus nebeneinander angeordneten konkaven Linsen gebildet ist, die gegenüber zu den Linsen des ersten Beugungsgitters (3) liegen, und wobei dieses Beugungsgitter (10') nach der Brennebene des ersten linsenförmigen Beugungsgitters (3) vorgesehen ist.

13. Optisches Gerät nach Anspruch 12, dadurch gekennzeichnet, daß das Beugungsgitter mit konkaven Linsen (10') vom zylindrischen Typ ist.

14. Optisches Gerät nach einem der Ansprüche 5 bis 8, 10 und 11, dadurch gekennzeichnet, daß es außerdem mit einer Mattscheibe auf der Höhe des zusammengesetzten Orthostereoskopen Bildes versehen ist.

15. Optisches Gerät nach einem der Ansprüche 5 bis 8, 10 und 12, dadurch gekennzeichnet, daß das linsenförmige Beobachtungs-Beugungsgitter (10) aus nebeneinander angeordneten sphärischen Linsen gebildet ist.

16. Optisches Gerät nach einem der Ansprüche 5 bis 8, 10 und 12, dadurch gekennzeichnet, daß das linsenförmige Beobachtungs-Beugungsgitter (10) aus zwei linsenförmigen Elementarbeugungsgittern gebildet ist, die verbunden bzw. verkittet sind und jeweils aus einer Reihe von nebeneinander angeordneten Zylinderlinsen bestehen, wobei die beiden linsenförmigen Elementarbeugungsgitter derart in einer Position verbunden sind, daß die Achsen der jeweiligen Linsen senkrecht ausgerichtet sind.

17. Optisches Gerät nach einem der Ansprüche 5 bis 8, und 10 bis 13, dadurch gekennzeichnet, daß es mit einem linsenförmigen Beugungsgitter (11) versehen ist, das die Rolle eines Strahlspreizers spielt und dessen Zylinderlinsen senkrecht zu den Zylinderlinsen des ersten Beugungsgitters (3) angeordnet sind.

18. Optisches Gerät nach einem der Ansprüche 5 bis 15, dadurch gekennzeichnet, daß eine Feldlinse (5) desselben Formats wie das erste linsenförmige Beugungsgitter (3) oder ein funktionell analoges Element oberhalb von diesem angeordnet ist, und daß alle linsenförmigen Beugungsgitter (3, 9, 10, 10') einen identischen Schritt bzw. eine identische Teilung besitzen.

19. Optisches Gerät nach Anspruch 18, dadurch gekennzeichnet, daß das Objektiv (1) und die Feldlinse (5) ein afokales System bilden.

20. Optisches Gerät nach einem der Ansprüche 5 bis 8 und 10 bis 19, dadurch gekennzeichnet, daß ein Okular (12) unterhalb bzw. hinter dem letzten linsenförmigen Beugungsgitter angeordnet ist.

21. Optisches Gerät nach einem der Ansprüche 5 bis 20, dadurch gekennzeichnet, daß eine Ausrichteinrichtung oberhalb bzw. vor dem Objektiv (1) vorgesehen ist, um das zusammengesetzte Probenbild auszurichten.

22. Optisches Gerät nach Anspruch 21, dadurch gekennzeichnet, daß die Ausrichteinrichtung von der Art eines Wollaston- oder Dove-Prismas ist.

23. Optisches Gerät nach Anspruch 21, dadurch gekennzeichnet, daß die Ausrichteinrichtung eine Spiegeleinrichtung ist.

FIG_1

FIG_2

0 084 998

$$\underline{FIG\_3}$$

$$\underline{FIG\_4}$$

2

FIG_5

FIG_6

0 084 998

FIG_7

0 084 998